# EUROPÄISCHE PATENTANMELDUNG

(11) **EP 2 088 121 A1**
(43) Veröffentlichungstag der Anmeldung: **12.08.2009**
(21) Anmeldenummer: 09152302.7
(22) Anmeldetag: 06.02.2009
(51) Int. Cl.: C01B 13/10, C01B 13/11

(54) **Transportable Einheit zur Erzeugung von Ozon**

(30) Priorität: 08.02.2008 AT 762008 U
(71) Anmelder: "Oxy 3" Egger KEG, 8600 Bruck an der Mur (AT)
(72) Erfinder: Egger, Andreas, 8600 Bruck an der Mur (AT)
(74) Vertreter: Vinazzer, Edith

(57) **Zusammenfassung**

Die Erfindung betrifft eine transportable Einheit (1) zur Erzeugung von Ozon in definierter Menge und Konzentration, mit einem mit Sauerstoff gefüllten Vorratsbehälter (6) und einem Ozongenerator (8), welcher mit dem Sauerstoff-Vorratsbehälter (6) fest verbunden ist, insbesondere auf den Vorratsbehälter (6) aufgesetzt ist, wobei Verbindungsleitungen (7, 7') zur Einspeisung von Sauerstoff in den Ozongenerator (8) und zur Entnahme des erzeugten Ozons über einen Auslass (16, 20) vorgesehen sind.

Der Ozongenerator (8) ist in einem Gehäuse (9) untergebracht, welches auf den Vorratsbehälter (6) aufgesetzt ist

## Beschreibung

Die Erfindung betrifft eine transportable Einheit zur Erzeugung von Ozon in definierter Menge und Konzentration, mit einem mit Sauerstoff gefüllten Vorratsbehälter und einem Ozongenerator, welcher mit dem Sauerstoff-Vorratsbehälter fest verbunden ist, insbesondere auf den Vorratsbehälter aufgesetzt ist, wobei Verbindungsleitungen zur Einspeisung von Sauerstoff in den Ozongenerator und zur Entnahme des erzeugten Ozons über einen Auslass vorgesehen sind.

Aus der WO-A- 94/03217 und der WO-A- 98/10774 sind derartige Einrichtungen bekannt, die für spezielle medizinische Zwecke vorgesehen und in Folge der erforderlichen und umfangreichen Komponenten voluminös ausgeführt und nur eingeschränkt transportierbar sind.

Es ist bekannt, verschiedene Gase als Handelgut in Form von Gasflaschen zu vertreiben. Gase wie Stickstoff, Sauerstoff und Edelgase werden dabei durch Luftzerlegung gewonnen und in Gasflaschen unterschiedlicher Größe unter Druck abgefüllt. Kohlendioxid stammt entweder aus Verbrennungsabgasen oder von natürlichen Vorkommen. Methan, Butan, Acetylen und dergleichen werden ebenso in Flaschen vertrieben wie Spezialgase, beispielsweise Blausäure, Kohlenmonoxid, Lachgas etc, die industriell hergestellt werden.

In der Reihe der industriell nutzbaren Flaschengase fehlt Ozon (O₃), welches insbesondere zum Bleichen von Ölen, Fetten, Wachsen, Synthesefasern, Papieren, Zellstoff, Textilien und dergleichen, zum Verbessern der Klebefähigkeit von KunststoffOberflächen, als Desinfektionsmittel, etwa in Brauhäusern, Kühlräumen und dergleichen, zur künstlichen Alterung von Weinbrand, zur Reinigung von Trinkwasser, zur Entkeimung von Schwimmbadwasser, zur Beseitigung übler Gerüche und zur Entgiftung und Reinigung von Abwasser verwendet wird. Darüber hinaus wird Ozon in der Medizin, beispielsweise zur Ozontherapie, verwendet. Ozon ist aufgrund seiner Neigung, zu Sauerstoff zu zerfallen, nicht lagerbar, kann daher nicht direkt für den Vertrieb in Gasflaschen abgefüllt werden, sondern muss jeweils vor Ort erzeugt werden. Für technische Anwendungen sind derzeit drei Verfahren zur Erzeugung von Ozon bekannt und üblich, die Erzeugung von Ozon durch UV-Strahlung unter Verwendung von UV-Stationen, ferner die Erzeugung von Ozon durch stille elektrische Entladung mit Hilfe eines Hochspannungswechselfeldes und der damit verbundenen Stoßionisation aus reinem Sauerstoff oder dem Sauerstoffanteil in der Luft, sowie die elektrolytische Ozonerzeugung durch Wasserelektrolyse.

Der Betrieb der erhältlichen und vor Ort zu verwendenden Ozonerzeuger bzw. Ozongeneratoren ist oft an technische Fertigkeiten gebunden, denen der Benützer bzw. der Kunde nicht gewachsen ist. Darüber hinaus ist die Wartung von vor Ort installierten Ozongeneratoren mit einem gewissen Aufwand verbunden.

Der Erfindung liegt die Aufgabe zugrunde, eine transportable und mobile Einheit zur Verfügung zu stellen, die eine definierte Menge an Ozon zur Verfügung stellt, vom Benützer auf einfache Weise verwendet werden kann und, analog zu den oben erwähnten üblichen Gasflaschen, nach "Gebrauch" wieder abgeholt wird.

Gelöst wird die gestellte Aufgabe erfindungsgemäß dadurch, dass der Ozongenerator in einem Gehäuse untergebracht ist, welches auf den Vorratsbehälter aufgesetzt ist.

Die Erfindung ist daher eine kompakte, leicht zu transportierende und mobile Einheit, die analog zu üblichen Gasflaschen, zur Verfügung gestellt werden kann. Die Befüllung bzw. der Austausch des Sauerstoff-Vorratsbehälters und die Wartungsarbeiten finden in einer zentralen Stelle statt. Der Benützer der Einheit braucht über keine besonderen technischen Fähigkeiten zu verfügen und ist mit Wartungs- und Reparaturarbeiten nicht belastet. Die Entnahme des hergestellten Ozons erfolgt analog zu üblichen Flaschengasen, beispielsweise über ein Auslassventil.

Aus der EP-A-0970916 ist eine Vorrichtung zur Ozonspeicherung bekannt, welche eine Adsorbtionskolonne besitzt, welche jedoch ständig unter -30°C gehalten werden muss. Diese Vorrichtung ist daher für den Vertriebsweg in Form von handelsüblichen Gasflaschen ungeeignet.

Eine Anzahl von Patentanmeldungen aus dem Stand der Technik, beispielsweise die WO-A- 9701507, die WO-A- 2004046028, die GB-A- 2403213, die US-A- 2004136884, die CN-A-101001807 und die WO-A- 2007014474, beschreiben Ozongeneratoren wie sie in Verbindung mit gegenständlicher Erfindung zum Einsatz kommen könnten. Als Ausgangsmaterial für die Ozonherstellung wird nach dem Stand der Technik getrocknete Luft oder, mit besseren Ausbeuten, Sauerstoff eingesetzt. In Luft bewegen sich typische Endkonzentrationen an Ozon zwischen einem und fünf Gewichtsprozent, in Sauerstoff zwischen sechs und dreizehn Gewichtsprozent. Die Ozonanreicherung ist im Wesentlichen vom Energieeintrag und der Gastemperatur abhängig. Kühlung kann den Wirkungsgrad verbessern. Ein System zur Anreicherung von Ozon und Rückgewinnung von nicht umgesetztem Sauerstoff durch Adsorbtion/Desorbtion auf Silikagel ist in der EP-A- 0103144 beschrieben. Eine Kombination dieser Technik mit der erfindungsgemäßen mobilen Einheit ist denkbar, wenn auch nicht bevorzugt.

Der mit Sauerstoff befüllte Vorratsbehälter ist insbesondere eine Sauerstoff-Druckflasche herkömmlicher Ausführung.

In der einfachsten Ausführung umfasst daher die transportable und mobile Einheit als Hauptbestandteile den Sauerstoff-Vorratsbehälter und das Gehäuse mit dem Ozongenerator. Der erwähnte Auslass, ein Auslassventil/Auslasshahn, wird dann an der Außenseite des Gehäuses angeordnet.

Bei einer anderen, ebenfalls vorteilhaften Ausführungsform der transportablen Einheit ist der Vorratsbehälter mitsamt dem Ozongenerator und dem gegebenenfalls vorgesehenen Gehäuse für den Ozongenerator, in einem Außenbehälter, welcher insbesondere in Gasflaschenform ausgeführt ist, untergebracht. Der Außenbehälter hat vor Allem eine Schutzfunktion und ermöglicht ein problemloses Transportieren der Einheit.

Der Sauerstoff-Vorratsbehälter kann dabei im Inneren des Außenbehälters verklemmt werden, beispielsweise an einem im Außenbehälter befindlichen und mit diesem verbundenen Gestell positioniert werden.

Der Ozongenerator kann eines der im Handel erhältlichen Geräte sein. Es eignen sich Ozongeneratoren, die Ozon nach dem Prinzip der stillen elektrischen Entladung erzeugen, ferner Ozongeneratoren, die Ozon unter Verwendung von UV-Strahlung erzeugen, und solche Ozongeneratoren, die Ozon auf elektrochemische Weise erzeugen.

Der Ozongenerator ist für seinen Betrieb mit elektrischer Spannung zu versorgen. Dazu kann vorgesehen sein, den Ozongenerator an das Stromnetz anzuschließen oder ein Batterie- oder Akkumulatorpaket vorzusehen.

Die transportable Einheit kann ferner mit einer Anzahl von Anzeigeeinrichtungen, insbesondere zur Anzeige und Überprüfung des Innendruckes im Sauerstoff-Vorratsbehälter, des Druckes des in den Ozongenerator eingespeisten Sauerstoffs, der Konzentration des erzeugten Ozons, der Betriebsdauer des Ozongenerators, der Temperatur im Außenbehälter und der Entnahmemenge an Ozon, versehen sein. Diese Anzeigeeinrichtungen sind, falls ein Außenbehälter vorgesehen ist, außerhalb des Außenbehälters positioniert.

Vorteilhafterweise sind ferner Regeleinrichtungen zur Regelung der Ozonkonzentration vorgesehen, wobei die Regelung insbesondere Mikroprozessor gesteuert erfolgt. Für Regelzwecke kann dem Ozongenerator ein Zwischenspeicher für Ozon nachgeordnet sein, wobei eine Zwischenspeicherung nur für einige wenige Minuten möglich ist.

Weitere Merkmale, Vorteile und Einzelheiten der Erfindung werden nun anhand der Zeichnung, die schematisch zwei Ausführungsbeispiele darstellt, näher beschrieben. Dabei zeigen

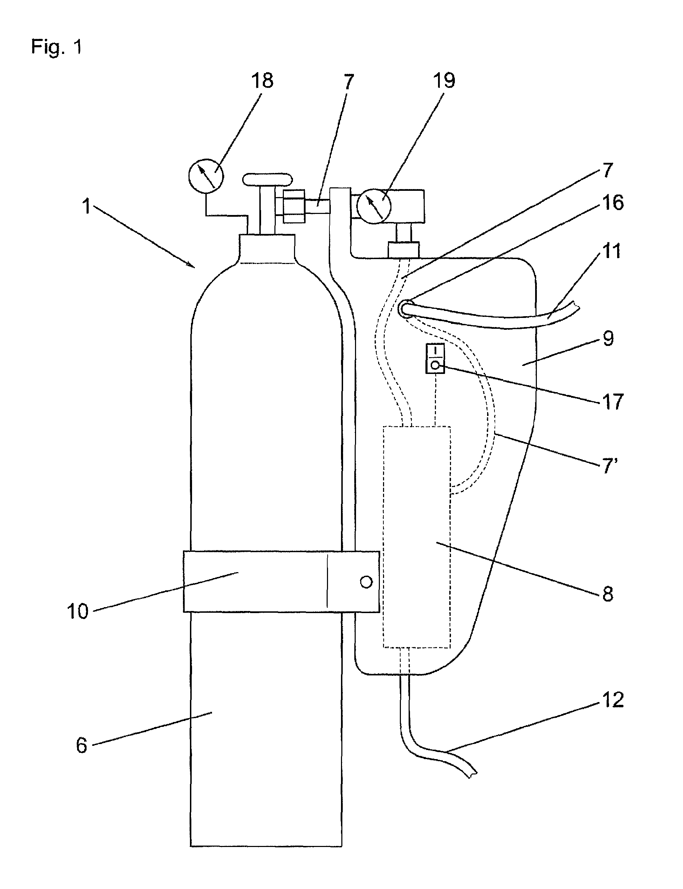

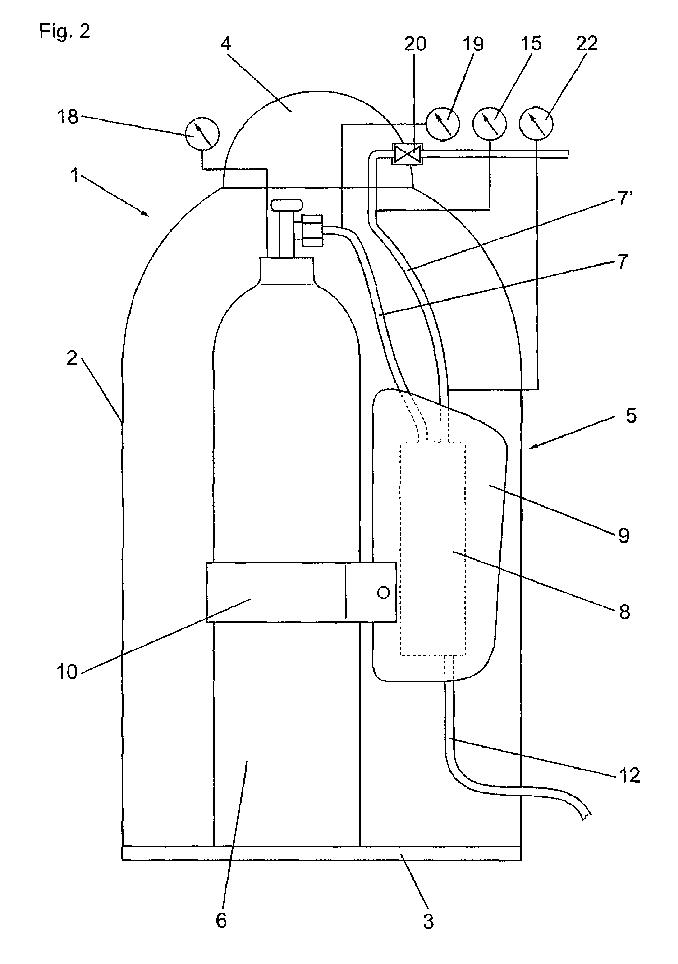

Fig. 1 und Fig. 2 jeweils eine Ausführungsform einer erfindungsgemäßen transportablen Einheit zur Bereitstellung von Ozon.

Die in Fig. 1 gezeigte Ausführungsform einer transportablen Einheit weist einen Vorratsbehälter 6 zur Bevorratung einer bestimmten Menge an Sauerstoff (O₂) auf, welche insbesondere eine übliche, mit Sauerstoff befüllte Stahlflasche ist. Am Vorratsbehälter 6 ist, beispielsweise über eine lösbare Manschette 10, ein Gehäuse 9 aufgesetzt, in welchem ein Ozongenerator 8 untergebracht ist, welcher eines der üblichen, im Handel erhältlichen Geräte sein kann und nach einem bekannten Prinzip Ozon aus Sauerstoff herstellt, beispielsweise nach dem Prinzip der stillen elektrischen Entladung, unter Verwendung von UV-Strahlung oder elektrochemisch. Vom Vorratsbehälter 6 stellt eine Verbindungsleitung 7, die in das Gehäuse 9 und bis zum Ozongenerator 8 geführt ist, die Versorgung des Ozongenerators 8 mit Sauerstoff sicher. Das im Sauerstoffgenerator 8 erzeugte Ozon wird über eine weitere Verbindungsleitung 7' zu einem Auslassventil/Auslasshahn 16 geleitet, wo eine Entnahmeleitung 11 anschließbar ist. Die Stromversorgung des Ozongenerators 8 erfolgt in diesem Beispiel über ein Kabel 12, welches an eine herkömmliche Steckdose, gegebenenfalls unter Zwischenschaltung eines Netzgerätes, anschließbar ist. Alternativ kann vorgesehen sein, im Gehäuse 9 ein Batterie- oder Akkumulatorpaket zur Spannungs- beziehungsweise Stromversorgung des Ozongenerators 8 vorzusehen. Die Inbetriebnahme beziehungsweise das Außerbetriebsetzen des Ozongenerators 8 erfolgt beispielsweise über einen an der Gehäuseaußenseite von Hand betätigbaren Schalter 17. Gezeigt sind ferner ein Manometer 18 zur Überprüfung des Druckes in Vorratsbehälter 6 und ein Manometer 19 zur Überprüfung des Druckes des in den Ozongenerator 8 eingespeisten Sauerstoffs.

Die in Fig. 2 gezeigte transportable Einheit 1 ist in Gasflaschenform ausgeführt und weist einen vorzugsweise aus Stahl bestehenden Außenbehälter 5 mit einem Mantel 2, einem Boden 3 und einem Deckel 4 auf. Im Inneren des Außenbehälters 5 ist der Vorratsbehälter 6 zur Bevorratung einer bestimmten Menge an Sauerstoff (O₂) eingebracht. Der Vorratsbehälter 6 kann bei geöffnetem Deckel 4 in den Außenbehälter 5 eingebracht und nach Verbrauch des Sauerstoffs aus diesem entnommen werden kann. Der Vorratsbehälter 6 ist im Außenbehälter 5 auf nicht gezeigte Weise, beispielsweise in einem am Boden 3 oder am Mantel 2 verankerten Gestell, gehalten und gegen Verrutschen gesichert. Eine Verbindungsleitung 7 verbindet den Vorratsbehälter 6 mit dem Ozongenerator 8, wobei nicht gezeigte Verbindungsflansche ein An- und Abkuppeln gestatten. Der Ozongenerator 8 ist analog zu Fig. 1 in einem öffen- und schließbaren Gehäuse 9 untergebracht, welches mittels einer Manschette 10 am Vorratsbehälter 6 lösbar befestigt ist. Es ist auch möglich, das Gehäuse 9 an einem Gestell oder einer sonstigen Aufnahmeeinrichtung, welche im Inneren des Außenbehälters 5, beispielsweise an der Mantelinnenseite, befestigt ist, zu positionieren. Eine Verbindungsleitung 7' transportiert das erzeugte Ozon vom Ozongenerator 8 zu einem am Deckel 4 des Außenbehälters 5 befindlichen Auslassventil 20, an welches bei Bedarf eine Entnahmeleitung 11 für das vom Ozongenerator 8 erzeugte Ozon (O₃) anschließbar ist.

Die Strom- bzw. Spannungsversorgung des Ozongenerators 8 kann, wie es in Fig. 2 gezeigt ist, von außerhalb des Außenbehälters 5 mittels eines Kabels 12 erfolgen, welches an eine herkömmliche Steckdose, ggf. unter Zwischenschaltung eines Netzgerätes, anschließbar ist. Alternativ kann im Außenbehälter 5 ein Batterie- oder Akkumulatorpaket untergebracht sein. Ein nicht gezeigter, von Hand betätigender Schalter gestattet eine Inbetriebnahme bzw. ein Außerbetriebsetzen des Ozongenerators 8.

Ein außerhalb des Außenbehälters 5 befindliches, mit dem Vorratsbehälter verbundenes Manometer 18 gestattet die Überprüfung des Druckes im Vorratsbehälter 6. Ein weiteres Manometer 19 gestattet die Überprüfung des Druckes des dem Ozongenerator 8 zugeführten Sauerstoffs. Eine Anzeigeeinrichtung 15 ist dafür vorgesehen, die Ozonkonzentration des im Ozongenerator 8 erzeugten Ozons anzuzeigen. Eine weitere Anzeigeeinrichtung 22 gestattet das Ablesen der Durchflussmenge des erzeugten Ozons. Es können noch weitere, nicht dargestellte Anzeigeeinrichtungen, beispielsweise zur Anzeige der Temperatur im Außenbehälter 5, vorgesehen sein. Die Anzeigeeinrichtungen beziehungsweise Anzeigegeräte können sämtlich in einem nicht dargestellten Gehäuse untergebracht sein.

Darüber hinaus können Regelungseinrichtungen vorgesehen sein, die für eine Regelung der Ozonkonzentration sorgen. Die Regelung der Ozonkonzentration kann über ein Infrarot-Ozonmessgerät erfolgen. Dabei wird die Ozonkonzentration beispielsweise über einen photometrischen Messwert in Anlehnung an die Norm DIN 19627 bei 253,7 nm ohne Eichung absolut gemessen. Die Einstellung der gewünschten Konzentration kann durch Mikroprozessoren gesteuert und durch die Regelung des Leistungseintrages in den Ozongenerator und die Steuerung des Durchflusses erfolgen. Dabei kann zusätzlich ein Zwischenspeicher für Ozon dem Ozongenerator 8 für Regelzwecke nachgeordnet sein, um die Regelcharakteristik zu verbessern. Eine Zwischenspeicherung von Ozon kann jedoch für maximal einige Minuten erfolgen.

### BEZUGSZIFFERNLISTE

1 .........transportable Einrichtung
2 ..... Mantel
3 ..... Boden
4 ..... Deckel
5.........Außenbehälter
6 .........Vorratsbehälter
7.........Verbindungsleitung
7' ........Verbindungsleitung
8 .........Ozongenerator
9 ..... Behältnis
10 ....... Manschette
11 ..... Entnahmeleitung
12 ..... Kabel
13 ..... Paket
14 ..... Leitung
15.....Anzeigeeinrichtung
16........Auslassventil
17........Schalter
18.....Manometer
19.....Manometer
20........Auslassventil
22........Anzeigeeinrichtung

## Patentansprüche

1. Transportable Einheit (1) zur Erzeugung von Ozon in definierter Menge und Konzentration, mit einem mit Sauerstoff gefüllten Vorratsbehälter (6) und einem Ozongenerator (8) , welcher mit dem Sauerstoff-Vorratsbehälter (6) fest verbunden ist, insbesondere auf den Vorratsbehälter (6) aufgesetzt ist, wobei Verbindungsleitungen (7, 7') zur Einspeisung von Sauerstoff in den Ozongenerator (8) und zur Entnahme des erzeugten Ozons über einen Auslass (16, 20) vorgesehen sind,
**dadurch gekennzeichnet,**
**dass** der Ozongenerator (8) in einem Gehäuse (9) untergebracht ist, welches auf den Vorratsbehälter (6) aufgesetzt ist.

2. Einheit nach Anspruch 1, **dadurch gekennzeichnet, dass** der Sauerstoff-Vorratsbehälter eine Sauerstoff-Druckflasche (6) ist.

3. Einheit nach Anspruch 1, **dadurch gekennzeichnet, dass** der Auslass (20) an der Außenseite des Gehäuses (9) angeordnet ist.

4. Einheit nach einem der Ansprüche 1 bis 3, **dadurch gekennzeichnet, dass** der Vorratsbehälter (6) mitsamt dem Ozongenerator (8) in einem Außenbehälter (5), welcher insbesondere Gasflaschenform aufweist, untergebracht sind.

5. Einheit nach Anspruch 4, **dadurch gekennzeichnet, dass** der Vorratsbehälter (6) an einem im Inneren des Außenbehälters (5) befindlichen und mit diesem verbundenen Gestell positionierbar ist.

6. Einheit nach einem der Ansprüche 1 bis 4, **dadurch gekennzeichnet, dass** der Ozongenerator (8) Ozon nach dem Prinzip der stillen elektrischen Entladung erzeugt.

7. Einheit nach einem der Ansprüche 1 bis 4 , **dadurch gekennzeichnet, dass** der Ozongenerator (8) Ozon unter Verwendung von UV-Strahlung erzeugt.

8. Einheit nach einem der Ansprüche 1 bis 4, **dadurch gekennzeichnet, dass** der Ozongenerator (8) Ozon auf elektrochemische Weise erzeugt.

9. Einheit nach einem der Ansprüche 1 bis 8, **dadurch gekennzeichnet, dass** der Ozongenerator (8) vom Stromnetz mit elektrischem Strom versorgbar ist.

10. Einheit nach einem der Ansprüche 1 bis 8, **dadurch gekennzeichnet, dass** ein Batterie- oder Akkumulatorpaket (13) zur Versorgung des Ozongenerators (8) mit elektrischem Strom vorgesehen ist.

11. Einheit nach einem der Ansprüche 1 bis 10, **dadurch gekennzeichnet, dass** Anzeigeeinrichtungen (15, 18, 19, 22) zur Anzeige und Überprüfung des Innendruckes im Sauerstoff-Vorratsbehälter (6), des Druckes des in den Ozongenerator (8) eingespeisten Sauerstoffs, der Konzentration des erzeugten Ozons, der Betriebsdauer des Ozongenerators (8), der Temperatur im Außenbehälter (5), der Entnahmemenge an Ozon und dergleichen vorgesehen sind.

12. Einheit nach einem der Ansprüche 1 bis 11, **dadurch gekennzeichnet, dass** Regeleinrichtungen zur Regelung der Ozonkonzentration vorgesehen sind.

13. Einheit nach Anspruch 12, **dadurch gekennzeichnet, dass** die Regelung der Ozonkonzentration Mikroprozessor gesteuert erfolgt.

14. Einheit nach Anspruch 12 oder 13, **dadurch gekennzeichnet, dass** dem Ozongenerator (8) ein Zwischenspeicher zur kurzfristigen Speicherung des erzeugten Ozons nachgeordnet ist.
